# EUROPEAN PATENT APPLICATION

(11) **EP 3 842 375 A1**
(43) Date of publication of application: **30.06.2021**
(21) Application number: 19850562.0
(22) Date of filing: 08.08.2019
(51) Int. Cl.: B66D 3/00, G01G 21/23, G01G 23/00

(54) **MOVABLE LIFTING DEVICE**

(30) Priority: 13.08.2018 CN 201821298556 U
(71) Applicant: Mettler Toledo Measurement Technology Company Limited, Changzhou, Jiangsu 213125 (CN); Mettler Toledo (Changzhou) Precision Instrument Ltd., Changzhou, Jiangsu 213022 (CN); Mettler-Toledo International Trading (Shanghai) Co., Ltd., Shanghai 200131 (CN)
(72) Inventor: ZHANG, Yinxiu, Changzhou, Jiangsu 213125 (CN); HUI, Huaqiang, Changzhou, Jiangsu 213125 (CN); ZHAO, Qingsong, Changzhou, Jiangsu 213125 (CN)
(74) Representative: Mettler-Toledo
(86) International application number: PCT/CN2019/099782
(87) International publication number: WO 2020/034891

(57) **Abstract**

The present invention provides a shifting-type lifting device, comprising a lifting and fixing device and a shifting device, wherein one end of the lifting and fixing device is connected to the shifting device, and the other end thereof is connected to a cargo to be shifted; and the free rotation of the lifting and fixing device converts a rotary motion into a linear motion to drive the to-be-shifted cargo to rise. The shifting-type lifting device of the present utility model has a simple and flexible structure, is easy to operate, and combines the functions of shifting and lifting, can be operated anytime and anywhere, and is suitable for a wide range of occasions. It can effectively reduce labor intensity and save manpower and material resources, has a low cost, and is easy for popularization.

## Description

### Technical Field

The present utility model relates to the field of shifting of small cargoes, and in particular to a shifting-type lifting device suitable for workplaces of a small ground scale and used for lifting and shifting of the ground scale.

### Background Art

At present, most of small cargoes (100-500 Kg) are still handled by manpower, because such cargoes are generally in an awkward condition which is superior to large equipment and is inferior to cargoes that require to be handled carefully.

In general, it is desirable to have loading and transportation means, i.e., a forklift truck, or dedicated equipment such as a hoister, but the fact is that it is difficult to have dedicated supporting loading and transportation equipment. Another reason is the constraint from the site, so that it is difficult to implement the functions of common equipment for cargoes placed in a narrow area.

Therefore, in practice, the means for small cargoes are still generally implemented by manpower or by dedicated equipment such as a forklift and a traveling crane. Such an operation obviously causes the waste of manpower. Even the dedicated equipment is available, on one hand, the equipment cannot be set up in time due to difficulty in shifting, constraints from the site and other reasons, having difficulty to function, on the other hand, the dedicated equipment is relatively expensive.

In view of this, those skilled in the art would have urgently needed to develop a lifting device that can be adapted to small ground scales in order to improve the above problems.

### Summary of invention

The technical problem to be solved by the present utility model is to provide a shifting-type lifting device in order to overcome the defects of no dedicated equipment available for loading and transporting small cargoes in the prior art.

The above-mentioned technical problem is solved in the present utility model by the following technical solution: a shifting-type lifting device, comprising a lifting and fixing device and a shifting device, wherein one end of the lifting and fixing device is connected to the shifting device and the other end thereof is connected to a cargo to be shifted, and the free rotation of the lifting and fixing device converts a rotary motion into a linear motion so as to drive the to-be-shifted cargo to rise.

According to an embodiment of the present utility model, the lifting and fixing device comprises a rotary screw, a lifting and fixing bracket and a fixed connection bolt, one end of the lifting and fixing bracket being connected to the to-be-shifted cargo by means of the fixed connection bolt, and the rotary screw being in threaded connection with the other end of the lifting and fixing bracket.

According to an embodiment of the present utility model, the lifting and fixing bracket comprises a threaded sleeve and a bracket body, the bracket body extending outward and obliquely downward along an outer wall face of the threaded sleeve, and the rotary screw being mounted to the threaded sleeve to form a rotary motion to drive a bearing of the shifting device to rotate.

According to one embodiment of the present utility model, the shifting device is a universal wheel.

According to one embodiment of the present utility model, the lifting and fixing bracket is further provided with reinforcing ribs, and the reinforcing ribs are disposed on two sides of the bracket body.

According to one embodiment of the present utility model, the reinforcing ribs surround the threaded sleeve and an outer side wall of the bracket body.

According to one embodiment of the present utility model, a lower end of the bracket body is provided with a mounting table, and the mounting table is connected to the to-be-shifted cargo by means of the fixed connection bolt.

According to one embodiment of the present utility model, two sides of the mounting table are provided with side plates, and the side plates are connected between the lower end of the bracket body and the mounting table.

According to one embodiment of the present utility model, the to-be-shifted cargo is a ground scale.

The present utility model has the following positive progressive effect: the shifting-type lifting device of the present utility model has a simple and flexible structure, is easy to operate, and combines the functions of shifting and lifting, can be operated anytime and anywhere, and is suitable for a wide range of occasions. It can effectively reduce labor intensity and save manpower and material resources, has a low cost, and is easy for popularization.

### Brief description of drawings

The above-mentioned and other features, properties and advantages of the present utility model will become more apparent from the following description of the embodiments with reference to the accompanying drawings, and the same reference numerals denote the same features throughout the figures, in the figures:
- Fig. 1: is a structural schematic diagram of a shifting-type lifting device of the present utility model.
- Fig. 2: is a diagram of a shifting-type lifting device of the present utility model in a state of use.

### Description of embodiments

To make the above-mentioned object, features and advantages of the present utility model more apparent and easily understood, a detailed description of particular embodiments of the present utility model is made in conjunction with the accompanying drawings.

An embodiment of the present utility model will be described now in detail with reference to the accompanying drawings. Reference will be made now in detail to a preferred embodiment of the present utility model, examples of which are illustrated in the accompanying drawings. The same reference numerals used in all the figures denote identical or similar parts wherever possible.

Furthermore, although the terms used in the present utility model are selected from well-known common terms, some of the terms mentioned in the description of the present utility model may have been selected by the applicant according to his or her determination, and the detailed meaning thereof will be illustrated in the relevant section described herein.

Furthermore, the present utility model must be understood, not simply by the actual terms used but also by the meaning of each term.

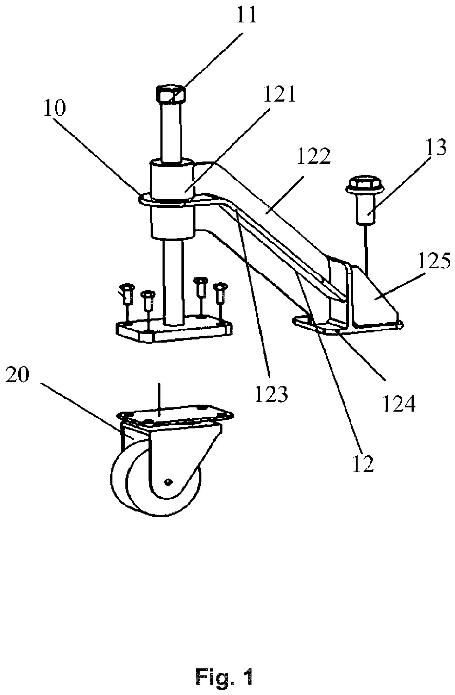

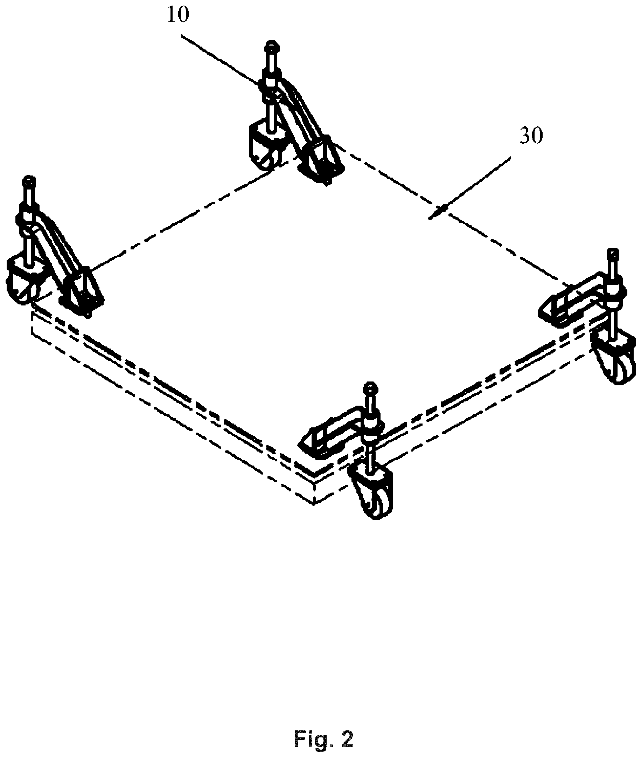

Fig. 1 is a structural schematic diagram of a shifting-type lifting device of the present utility model. Fig. 2 is a diagram of a shifting-type lifting device of the present utility model in a state of use.

As shown in Figs. 1 and 2, the present utility model discloses a shifting-type lifting device, comprising a lifting and fixing device 10 and a shifting device 20. One end of the lifting and fixing device 10 is connected to the shifting device 20, and the other end thereof is connected to a to-be-shifted cargo 30. The free rotation of the lifting and fixing device 10 converts a rotary motion into a linear motion so as to drive the to-be-shifted cargo 30 to rise. The to-be-shifted cargo 30 herein is preferably a ground scale.

Preferably, the lifting and fixing device 10 comprises a rotary screw 11, a lifting and fixing bracket 12 and a fixed connection bolt 13. One end of the lifting and fixing bracket 12 is connected to the to-be-shifted cargo 30 by means of the fixed connection bolt 13, and the rotary screw 11 is in threaded connection with the other end of the lifting and fixing bracket 12. Further, the lifting and fixing bracket 12 comprises a threaded sleeve 121 and a bracket body 122. The bracket body 122 extends outward and obliquely downward along an outer wall face of the threaded sleeve 121, and the rotary screw 11 is mounted to the threaded sleeve 121 to form a rotary motion to drive a bearing of the shifting device 20 to rotate. The shifting device 20 herein is preferably a universal wheel.

In addition, the lifting and fixing bracket 12 is further provided with reinforcing ribs 123, and the reinforcing ribs 123 are disposed on two sides of the bracket body 122. The reinforcing ribs 123 surround the threaded sleeve 121 and an outer side wall of the bracket body 122. A lower end of the bracket body 122 is provided with a mounting table 124, and the mounting table 124 is connected to the to-be-shifted cargo by means of the fixed connection bolt 13.

Further, two sides of the mounting table 124 are provided with side plates 125, and the side plates 125 are connected between the lower end of the bracket body 122 and the mounting table 124.

According to the above structural description, the shifting-type lifting device of the present utility model uses a lifting and fixing device and a shifting device, with a bolt coupling being required therebetween. The lifting and fixing device is composed of a rotary screw, a lifting and fixing bracket and a fixed connection bolt, and the fixing bracket and an object to be lifted are fixed by a detachable fixed connection bolt, so that the fixing bracket and the object to be lifted form as a whole. The rotary screw can be rotated freely and form a rotary motion with the threads of the sleeve in the fixing bracket to drive the bearing of the universal wheel to rotate, thereby converting the rotary motion into a linear motion so as to lift the cargo.

With the shifting-type lifting device of the present utility model, the lifting and fixing device and the small ground scale are coupled as a whole, and by rotating a bolt, a rotary motion between the rotating bolt and the fixing bracket is converted into a linear motion so as to drive the ground scale to rise. The fixing bracket is connected to the universal wheel, so that after the small ground scale rises, the whole ground scale can be easily shifted. According to the weight, i.e., the size, of the ground scale itself, the matched number of the simple shifting-type lifting devices can be adjusted, generally 2 or 4 sets.

In summary, the shifting-type lifting device of the present utility model solves the functions of lifting and shifting without equipment such as a forklift, a traveling crane and the like, has a simple and small structure, and can perform lifting and shifting anytime and anywhere when used, effectively reducing the labor intensity for handling and like, saving manpower and material resources and reducing costs, which is worth popularization.

While the particular embodiments of the present utility model have been described above, a person skilled in the art should understand that these are merely illustrative and that the scope of protection of the present utility model is defined by the appended claims. Various alterations or modifications can be made by a person skilled in the art to these embodiments without departing from the principle and substance of the present utility model. However, these alterations and modifications all fall within the scope of protection of the present utility model.

### Reference signs list

| | |
|---|---|
| Lifting and fixing device | 10 |
| Shifting device | 20 |
| Cargo to be shifted | 30 |
| Rotary screw | 11 |
| Lifting and fixing bracket | 12 |
| Fixed connection bolt | 13 |
| Threaded sleeve | 121 |
| Bracket body | 122 |
| Reinforcing rib | 123 |
| Mounting table | 124 |
| Side plate | 125 |
| Lifting and fixing device | 10 |

## Claims

1. A shifting-type lifting device, comprising a lifting and fixing device and a shifting device, wherein one end of the lifting and fixing device is connected to the shifting device, and the other end thereof is connected to a cargo to be shifted; and the free rotation of the lifting and fixing device converts a rotary motion into a linear motion to drive the to-be-shifted cargo to rise.

2. The shifting-type lifting device of claim 1, wherein the lifting and fixing device comprises a rotary screw, a lifting and fixing bracket and a fixed connection bolt, one end of the lifting and fixing bracket being connected to the to-be-shifted cargo by means of the fixed connection bolt, and the rotary screw being in threaded connection with the other end of the lifting and fixing bracket.

3. The shifting-type lifting device of claim 2, wherein the lifting and fixing bracket comprises a threaded sleeve and a bracket body, the bracket body extending outward and obliquely downward along an outer wall face of the threaded sleeve, and the rotary screw being mounted to the threaded sleeve to form a rotary motion to drive a bearing of the shifting device to rotate.

4. The shifting-type lifting device of claim 3, wherein the shifting device is a universal wheel.

5. The shifting-type lifting device of claim 3, wherein the lifting and fixing bracket is further provided with reinforcing ribs, and the reinforcing ribs are disposed on two sides of the bracket body.

6. The shifting-type lifting device of claim 5, wherein the reinforcing ribs surround the threaded sleeve and an outer side wall of the bracket body.

7. The shifting-type lifting device of claim 3, wherein a lower end of the bracket body is provided with a mounting table, and the mounting table is connected to the to-be-shifted cargo by means of the fixed connection bolt.

8. The shifting-type lifting device of claim 7, wherein two sides of the mounting table are provided with side plates, and the side plates are connected between the lower end of the bracket body and the mounting table.

9. The shifting-type lifting device of any one of claims 1-8, wherein the to-be-shifted cargo is a ground scale.
